# EUROPEAN PATENT SPECIFICATION

(11) **EP 2 096 569 B1**
(45) Date of publication and mention of the grant of the patent: **18.04.2012**
(21) Application number: 08152188.2
(22) Date of filing: 29.02.2008
(51) Int. Cl.: G06F 21/00, H04L 29/06

(54) **System and method for shared resource owner based access control**
System und Verfahren für die gemeinsame besitzerbasierte Ressourcen-Zugriffssteuerung
Système et procédé pour contrôler l'accès sur la base du propriétaire des ressources partagées

(43) Date of publication of application: 02.09.2009
(73) Proprietor: RESEARCH IN MOTION LIMITED, Waterloo, Ontario N2L 3W8 (CA)
(72) Inventor: Sherkin, Alexander, Newmarket, Ontario L3X 2J2 (CA); Goring, Bryan, Milton, Ontario L9T 5V4 (CA); Doktorova, Laura, Mississauga, Ontario L5M 6E1 (CA)
(74) Representative: Patel, Binesh

(56) References cited:
- EP-A- 1 688 818
- WO-A-01/63385
- WO-A-99/64948
- US-A1- 2005 246 524
- CARL M ELLISON CYBERCASH ET AL: "Simple Public Key Certificate; draft-ietf-spki-cert-structure-05.txt" 13 March 1998 (1998-03-13), IETF STANDARD-WORKING-DRAFT, INTERNET ENGINEERING TASK FORCE, IETF, CH , XP015028684 ISSN: 0000-0004 * page 17, paragraph 4.3 *

## Description

The present patent disclosure relates generally to a communications system for providing communications to a plurality of devices and specifically to a system and method for shared resource owner based access control.

### BACKGROUND

Due to the proliferation of wireless devices in use today, there is a continually increasing number of wireless networks. These wireless devices include mobile telephones, wireless personal digital assistants (PDAs), and other wireless multifunctional gadgets. Concurrently with the increase of available wireless devices, software applications running on such devices have increased their utility and complexity. For example, a wireless device may include an application that retrieves a weather report for a list of desired cities or an application that allows a user to bank online. These software applications take advantage of the ability to transmit data of the wireless network in order to provide timely and useful services to users, often in addition to voice communication.

A wireless device generally includes a runtime environment in which an application resides. A process is generally an instance of the application when executed in the runtime environment. The runtime environment generally includes one or more resources. A resource is generally a physical or a virtual component that can be accessed by a process. A resource may be accessed by more than one processes and thus is shared by these processes. However, not every process in the runtime environment should have the privilege to access every resource in the runtime environment. For security reasons, access to shared resources in runtime environment should be controlled.

Access control rules are generally defined within the runtime environment for the resources, by a user who has direct access to the runtime environment. For example, a user of a computer usually decides the access control rules on his computer. Therefore, access control rules for a runtime environment generally can only be defined by the user who has access to the runtime environment.

This approach has some significant limitations. The user of a runtime environment usually does not have enough information to properly specify access control rules for resources. The problem is compounded for shared resources, where a plurality of processes executing their respective applications. The user may not even be aware which processes should be given the privilege to access the resources in the respective access control rules.

In certain situations it may be desirable to specify the access control rules by an entity other than the user of the runtime environment. The need arises more prominently for runtime environments on the wireless devices. For example, a bank may create a library for a wireless device. The bank expects to have an exclusive right to control access to this library at runtime on all wireless devices suitable to run the library.

Therefore there is a need for a method and a system for shared resource access control that is suitable for runtime environments in distributed and/or wireless systems.

US 2006/0200668 discloses a process to secure the execution of an application on an intelligent mobile telephone, in which each application is identified by an identifier and a table or rights is associated with each resource on the mobile telephone. Through a table of rights, access rights to the resource can be associated with an application identifier. This makes it possible to manage, for each resource, the applications that are allowed to invoke the resource. Moreover, the rights associated with a resource can only be modified by the owner of the resource.

WO 0163385 discloses a computer system having a resource, a verification unit and an execution engine for running a body of program code having an associated signature. A cryptographic key is associated with the resource and when the code is to be loaded into the execution engine a verification operation is run on the signature using the cryptographic key associated with the resource. The execution engine is separate from the resource and when access to the resource is required by the code in the execution engine a further verification operation is conducted on the signature using the cryptographic key associated with the resource. Access to the resource by the code depends upon the result of the verification operation.

### BRIEF DESCRIPTION OF THE DRAWINGS

An embodiment of the patent disclosure will now be described by way of example only with reference to the following drawings in which:

Figure 1 shows an example of a network facilitating wireless component applications in a schematic diagram;

Figure 2 shows an example of a wireless component application communication model in a flow diagram;

Figure 3 shows an example of the application gateway shown in Figure 1 in a detailed component diagram;

Figure 4 shows in a component diagram an example of a runtime environment structure;

Figure 5 shows a runtime environment including an application, a process and a resource;

Figure 6 shows a runtime environment including a plurality of applications;

Figure 7 depicts an owner distributing resources to a plurality of runtime environments;

Figure 8 shows a runtime environment including application and shared resource with their respective owners;

Figure 9 depicts a shared resource access control model in accordance with an embodiment of the present patent disclosure;

Figure 10 shows a high level schematic of an access control ticket;

Figure 11 shows a non-limiting example of an access control ticket;

Figure 12 shows the life cycle of an access control ticket;

Figure 13 illustrates association between a shared resource and a public key and an association between a public key and a name;

Figure 14 shows applications with and without application owners accessing a shared resource;

Figure 15 illustrates an example where permissions are granted to all application owners;

Figure 16 illustrates an example where permissions are granted to all shared resources; and

Figure 17 shows steps of an exemplary method for approving an access control ticket.

### SUMMARY

The patent disclosure provides a system and method for shared resource owner based access control.

In accordance with an embodiment of the present patent disclosure there is provided a method for controlling an access to a resource, the method comprising the steps of claim 1.

Preferably, the first owner identifier or the second owner identifier is a cryptographically verifiable identifier, and/or wherein the runtime environment is on a wireless device.

Preferably, the method further comprises the step of signing the resource or the application with a private key, resulting in a signature verifiable with a public key corresponding to the private key.

Preferably, the cryptographically verifiable identifier is the public key or an X509 name, particularly, wherein the public key and the X509 name is associated and attested by a certificate.

Preferably, the access control ticket further includes a first identifier identifying the resource in the runtime environment, and a second identifier identifying the application in the runtime environment.

Preferably, the first identifier and/or the second identifier is a URI or a hash value of the resource.

Preferably, the resource is a shared resource.

Preferably, the method further comprises the step of signing the access control ticket.

Preferably, the access control ticket is created by an owner of the application or an owner of the shared resource, and approved by the resource owner.

In accordance with another embodiment of the present patent disclosure there is provided a wireless device as claimed in claim 9.

### DETAILED DESCRIPTION OF PREFERRED EMBODIMENTS

Reference will now be made in detail to some specific embodiments of the patent disclosure. Examples of these specific embodiments are illustrated in the accompanying drawings. While the disclosure is described in conjunction with these specific embodiments, it will be understood that it is not intended to limit to the described embodiments. On the contrary, it is intended to cover alternatives, modifications, and equivalents as may be included within the scope of the patent disclosure. In the following description, numerous specific details are set forth in order to provide a thorough understanding of the present patent disclosure. The present patent disclosure may be practiced without some or all of these specific details. In other instances, well-known process operations have not been described in detail in order not to unnecessarily obscure the present patent disclosure.

In this specification and the appended claims, the singular forms "a," "an," and "the" include plural references unless the context clearly dictates otherwise. Unless defined otherwise, all technical and scientific terms used herein have the same meaning as commonly understood to one of ordinary skill in the art to which this patent disclosure belongs.

The term "application" is intended to describe a collection of computer executable instructions. Different types of application are envisioned in the embodiments of the present patent disclosure, for example but not limited to, mobile data server (MDS) applications, Java applications, or other executable set of instructions.

The term "process" is intended to describe an instance of an application that is being executed, for example, in a runtime environment.

-The term "resource" is intended to describe a physical or a virtual component that can be accessed by a process. Different types of resources are envisioned in the embodiments of the present patent disclosure, for example but not limited to, shared data, runtime environment plug-ins, application entry points, etc.

The term "runtime environment" is intended to describe an environment in which processes are executed. Runtime environment generally provides software services for processes executed by the environment. Runtime environment, for example, facilitates process access to various resources.

The term "shared resource" is intended to describe a resource that may be accessed by more than one process in runtime environment. Examples of shared resources may include, but not limited to: common scripts, common screens, common library, shared data, and common plug-ins.

The term "Cryptographically Verifiable Object Identifier" (CVOID) is used to describe an identifier associated with an object such that given an object and the associated CVOID, a party would be able to verify authenticity of the association with a certain degree of reliability.

The term "access control ticket" is intended to describe a document that specifies who can access what and what the permissions are.

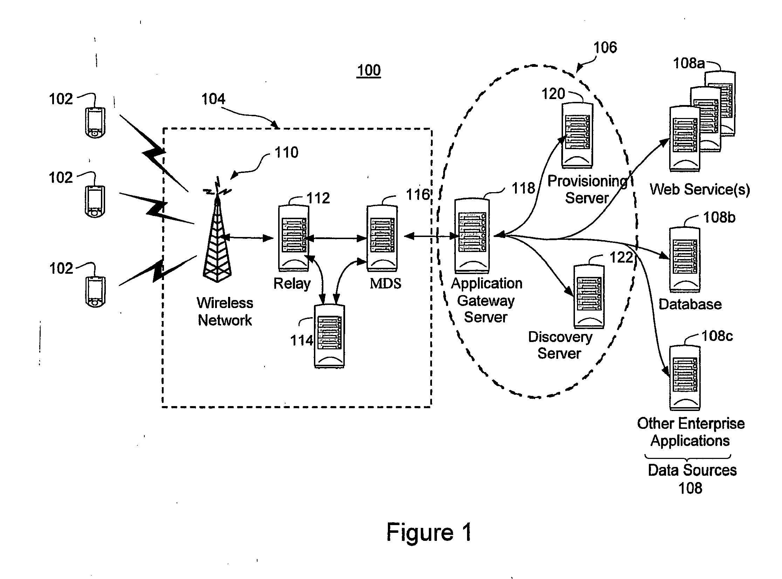

Figure 1 and the following discussion are intended to provide a brief general description. Figure 1 illustrates a block diagram of a suitable communication infrastructure 100 in which a preferred embodiment of the present patent disclosure may be implemented. The communication infrastructure 100 comprises a plurality of wireless devices 102, a communication network 104, an application gateway 106, and a plurality of back-end services 108.

The wireless devices 102 are typically personal digital assistants (PDAs), but may include other devices. Each of the wireless devices 102 includes a runtime environment capable of hosting a plurality of component applications.

The wireless devices 102 are in communication with the application gateway 106 via the communication network 104. Accordingly, the communication network 104 may include several components such as a wireless network 110, a relay 112, a corporate server 114 and/or an MDS 116 for relaying data between the wireless devices 102 and the application gateway 106.

The application gateway 106 may comprise a gateway server 118, a provisioning server 120 and a discovery server 122. The gateway server 118 generally acts as a message broker between the runtime environment on the wireless devices 102 and the back-end services 108. The gateway server 118 may be in communication with both the provisioning server 120 and/or the discovery server 122. The provisioning server 120 and the discovery server 122 generally provide enterprise services. The gateway server 118 may further be in communication with a plurality of the back-end services 108, such as Web services 108a, database services 108b, as well as other enterprise services 108c, via a suitable link. For example, the gateway server 118 may be connected with the Web services 108a and database services 108b via Simple Object Access Protocol (SOAP) and Java Database Connectivity (JDBC), respectively. Other types of back-end services 108 and their corresponding links can be connected to the gateway server 118.

Preferably, each wireless device 102 is initially provisioned with parameters to establish various protocols and settings, including connectivity information for the corporate server 114 and/or the mobile data server 116. These parameters may include a uniform resource locator (URL) for the application gateway server 118 as well as its encryption key. Alternatively, if the wireless device 102 is not initially provisioned with the URL and encryption key, they may be pushed to the wireless device 102 via the mobile data server 116. The mobile device 102 can then connect with the application gateway 106 via the URL of the application gateway server 118.

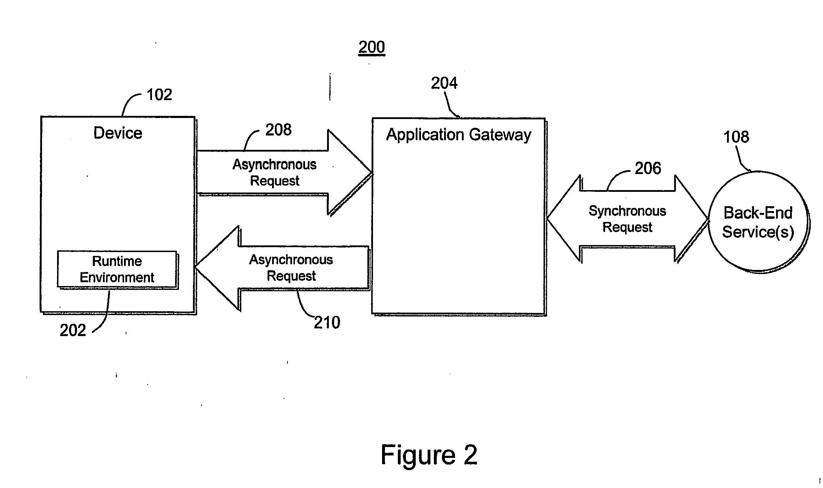

Referring to Figure 2 there is illustrated in a block diagram an example of a wireless component application communication infrastructure 200. The overall wireless component application infrastructure 200 generally includes a wireless component application runtime environment (RE) 202 running on the wireless device 102 and a wireless component application gateway (AG) 204 running on the server 118.

Component applications generally comprise one or more data components, presentation components, and/or message components, which may generally be written in a structured definition language such as Extensible Markup Language (XML) code. The component applications may further comprise workflow components which contain a series of instructions, and may be embedded in the XML code. Therefore, since the applications are compartmentalized, a common application can be written for multiple devices by providing corresponding presentation components without having to rewrite the other components. Further, large portions of the responsibility of typical applications are transferred to the runtime environment for component application.

The application gateway 204 serves as a mediator between a wireless component application executed by the runtime environment 202 and one or more back-end services 108 with which the application communicates. Often the back-end service is expected to be a Web service 108a using SOAP over HTTP or HTTPS as the transport protocol. As Web services are the commonly expected back-end service 108, the term Web service is used interchangeable with back-end service 108 throughout this disclosure. However, it should be apparent to a person skilled in the art that other types of back-end services can also be adapted to the disclosure. Figure 2 shows a synchronous link 206 between the application gateway 204 and the back-end service 108. However, it should be appreciated by a skilled artisan that the application gateway 204 can be in communication with back-end services 108 over asynchronous links. In the non-limiting example shown in Figure 2, the requests 208, 210 between the wireless device 102 and the application gateway 204 are sent asynchronous.

The wireless component application communication architecture 200 is generally based upon an asynchronous messaging paradigm. In this communication architecture 200 the application gateway 204 establishes and mediates the connection between the device 102 and the back-end service(s) 108 to:
1. Achieve greater flexibility in resource management.
2. Provide reliable communication link between device 102 and back-end service 108 to handle situations when wireless coverage is unstable.
3. Efficiently distribute workload between device runtime environment 202 and application gateway 204.

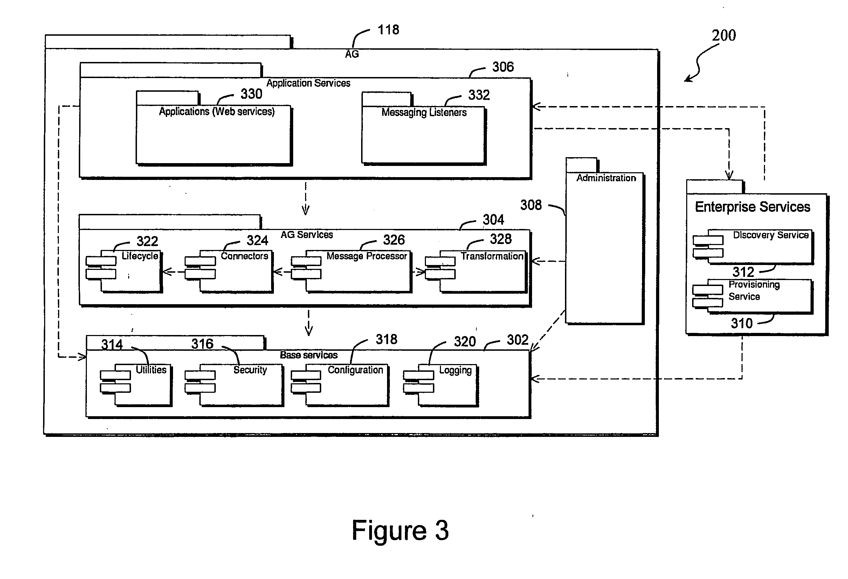

Figure 3 shows a more detailed view of an exemplary application gateway 200. The application gateway server 118 generally includes three layers of service; a base services layer 302, an application gateway services layer 304 and an application services layer 306. The application gateway server 118 further includes an administration service 308.

A provisioning service 310 and a discovery service 312 are provided by the provisioning server 120 and discovery server 122, respectively.

At the lowest level, the base services layer 302 offers basic, domain-independent system services to other subsystems in higher levels. Thus, for example, all subsystems in the application gateway services layer 304 and the application services layer 306 can utilize and collaborate with the subsystems in the base services layer 302. In the present embodiment, the base services layer 302 includes a utilities subsystem 314, a security subsystem 316, a configuration subsystem 318, and a logging subsystem 320.

The application gateway services layer 304 provides wireless component application domain-specific services. These services provide message transformation and delivery to back-end services 108 and provide wireless device 102 and component application lifecycle management. In the present embodiment, the application gateway services layer 304 includes a lifecycle subsystem 322, a connector subsystem 324, a messaging subsystem 326, and a transformation subsystem 328.

The application services layer 306 provides external program interfaces and user interfaces using subsystems provided by the lower layers. For example, various applications such as a service provider lifecycle application, a packaging application or a message listening application provides external program interfaces since they communicate primarily with applications on external systems. For example, the messaging listening application (or messaging listeners 332) provides an interface for receiving messages from the wireless devices 102 as well as external sources and forwarding them to the messaging subsystem. Further, the message listening application 330 typically authenticates that the source of the message is valid.

Other applications 330 may provide a user interface for accessing and potentially modifying application gateway data and/or parameters.

The administration service 308 is responsible for administrative system messages, administration of the wireless devices 102, runtime administration of the application gateway subsystems, support and display system diagnostics, and administration of default implementations of the provisioning and discovery services.

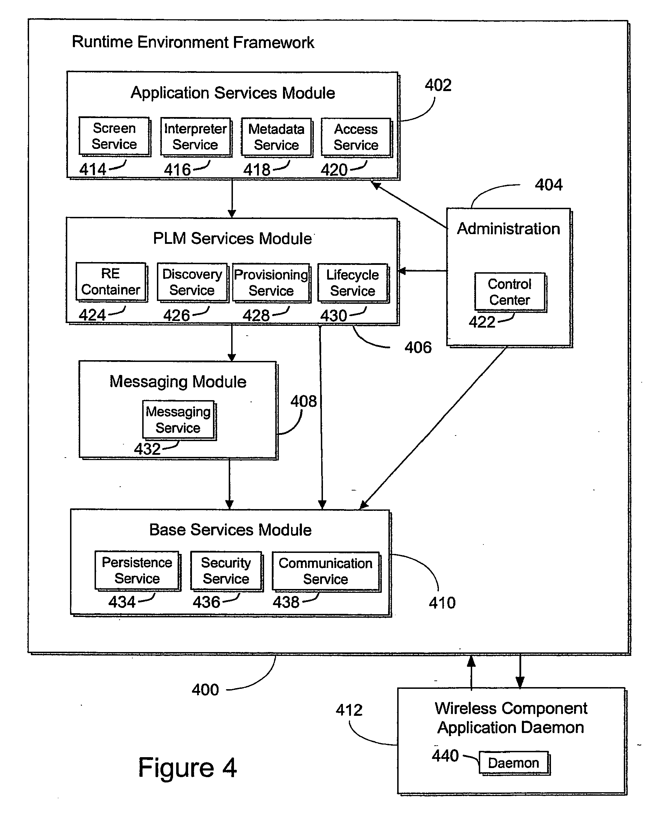

Figure 4 shows an example of a runtime environment framework 400. The runtime environment framework 400 comprises an application services module 402, an administration module 404, a provisioning and lifecycle management (PLM) services module 406, a messaging module 408, and a base services module 410.

The application services module 402 may include, for example, a screen service 414 for providing an interface between currently running applications and a user, an interpreter service 416 for providing an execution environment for the applications, a metadata service 418 for handling and mediating application metadata related access, and an access service 420 for allowing applications to access other applications on the device 102.

The administration module 404 may include a control center 422 for handling a user interface of the wireless component application runtime environment framework 400, processing user interaction with the runtime environment framework 400, and for integrating the runtime environment framework 400 with the network system 100.

The PLM services module 406 may include a runtime environment container 424 for coordinating runtime environment container upgrades and backup/restore processes and for implementing a default error handling mechanism for the runtime environment framework 400, a discovery service module 426 for locating applications in an application repository, a provisioning service 428 for application provisioning (including application downloads, installation and upgrades), and a lifecycle service 430 for registering, maintaining information for, and administrating applications.

The messaging module 408 may include a messaging service module 432 for message queuing, message (de)compacting, and message distribution.

The base services module 410 may include a persistence service 434 for storing a runtime environment profile (including version, directory, client administration policy, application administration policies, security keys, available upgrades, etc.), storing an application profile (including version, metadata, application persistence data components, application persistable global data and application resource, available upgrades, etc.), and storing reliable messages (including outgoing messages pending delivery due to out-of-coverage, and incoming reliable messages pending processing). The base services module 410 also includes a security service 436 for restricting access to runtime environment services; providing message authentication, integrity, and encryption. The base services module 410 also includes a communication service 438 for sending and receiving messages in and out of the device 102, downloading resources and files from appropriate repositories, and notifying interested runtime environment services about wireless coverage events.

The runtime environment framework 400 may communicate with a wireless component application daemon 412. The wireless component application daemon module 412 includes a daemon 440 for restarting the wireless component application process whenever it stops due to a fatal exception.

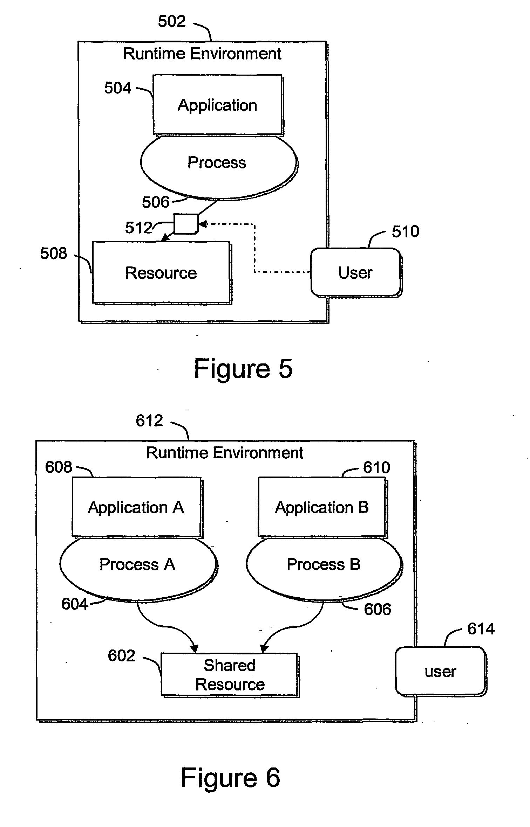

Referring to Figure 5, a runtime environment 502 including an application 504, for example but not limited to, a mobile data server (MDS) application, a Java application, is shown. An application generally comprises a collection of passive instructions. A process 506 is generally an instance of an application when executed in the runtime environment 502. The runtime environment 502 may include one or more resources 508, for example but not limited to, shared data, runtime environment plug-ins, application entry points. A resource is generally a physical or a virtual component that can be accessed by a process. However, not every process in the runtime environment has the privilege to access every resource in the runtime environment. For security reasons, access to shared resources in runtime environment should be controlled.

Access control rules are generally defined within the runtime environment for the resources, by a user who has direct access to the runtime environment. As illustrated in Figure 5, the user 510 of the runtime environment 502 defines access control rules 512 for application 504 accessing the resources 508 in run time environment 502. An example would be a user of a computer, who usually decides the access control rules on his computer.

With this conventional approach, access control rules for a runtime environment generally can only be defined by the user who has access to the runtime environment.

This approach has some significant limitations. The user of a runtime environment usually does not have enough information to properly specify access control rules for resources. Referring to Figure 6, this problem is further compounded for shared resources 602, where two processes, process A 604 and process B 606, executing their respective application A, 608 and application B, 610 in a runtime environment 612. In the two examples shown in Figures 5 and 6, the user 510 or 614 may not even be aware which processes should be given the privilege to access the resources in the respective access control rules.

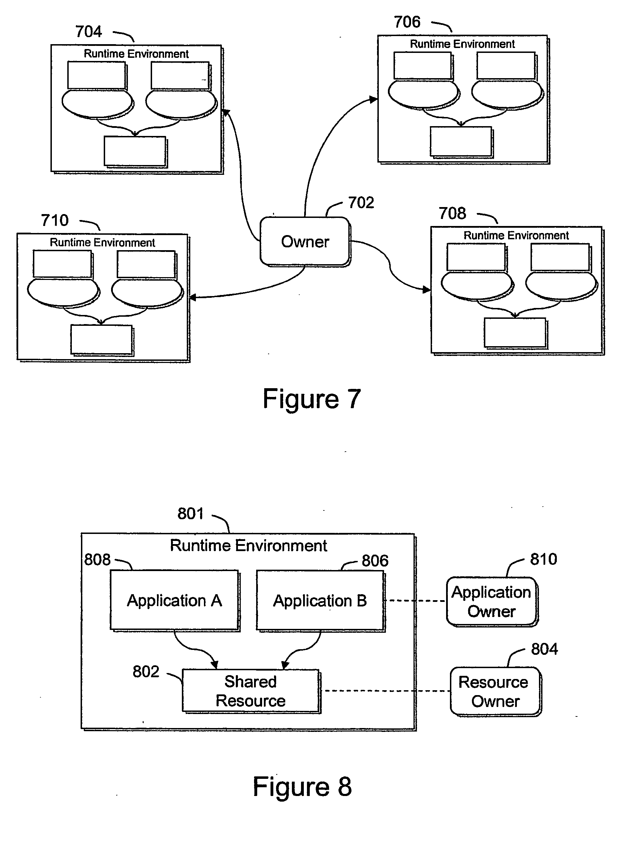

In certain situations it may be desirable to specify the access control rules by an entity other than the user of the runtime environment. The need arises more prominently for runtime environments running on wireless devices. As illustrated in Figure 7, an owner 702 may distribute resources to a plurality of runtime environments 704, 706, 708, and 710 and desire to retain the ability to specify the access control rules to these resources. For example, a bank may create a library for a wireless-device. The bank expects to have an exclusive right to control access to this library at runtime on all wireless devices suitable to run the library.

In accordance with one embodiment of the present patent disclosure, there is provided a method and a system for shared resource access control that is suitable for runtime environments in distributed systems. The distributed systems may be wireless systems.

Referring to Figure 8, a shared resource 802 has a shared resource owner 804. The owner 804 of the shared resource 802 may be, but not limited to, an author or a vendor of the shared resource 802. An application 806 which has a process running in the runtime environment 801 may also have an application owner 810. The owner 810 of the application 806 may also be, but not limited to, an author or a vendor of the application. In Figure 8 and some following Figures, applications are shown to access the shared resource. However, it should be apparent to a person skilled in the art that in the runtime environment, a process executing instructions of an application actually accesses the shared resource, as for example, illustrated in Figure 5. Shared resource may generally be any type of identifiable object and can be accessed by one or more applications. Applications may generally be any type of identifiable entity that can access shared resource. It should be apparent to a person skilled in the art that, in a degenerate case, shared object owner and application owner may be the same entity.

In accordance with one embodiment of the present patent disclosure, access to a shared resource is controlled by the shared resource owner. The shared resource access control rules specified and provided by the shared resource owner or application owner apply and approved by the shared resource owner generally to the runtime environment which has the corresponding shared resource deployed. The access control rules will be generally defined and enforced from the shared resource owner in a remote runtime environment. In general, no secure link between the shared resource owner and the runtime environment is required. In other words, access control rules for a shared resource approved by shared resource owner do not need to be securely propagated to every device having the shared resource deployed.

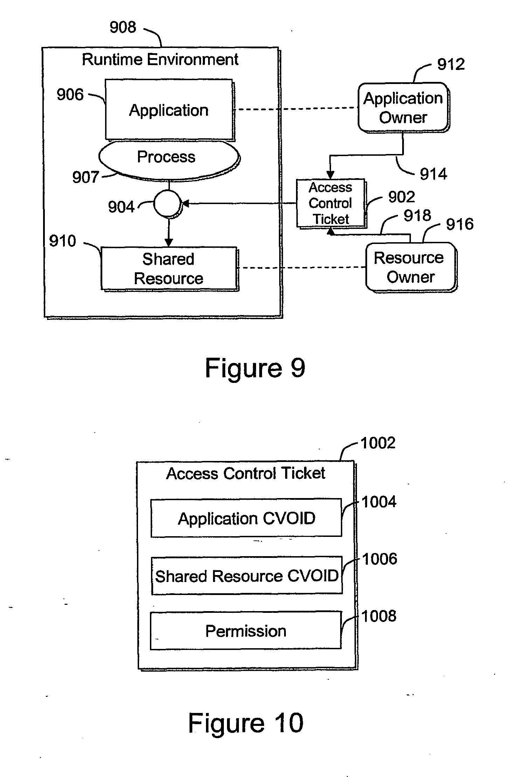

Referring to Figure 9, a shared resource access control model generally uses an access control ticket 902 to grant access privilege, a non-limiting example of an access privilege would be a permission. In Figure 9, a permission 904 is granted to an application 906, executing an process 907, in a runtime environment 908 to a shared resource 910 based on the access control ticket 902. The application 906 is owned by the application owner 912, who may, as will be described below, request 914 to access the shared resource 910. The shared resource 910 is owned by the resource owner 916, who generally creates or approves 918 the access control ticket 902.

For example, a bank creates a library for a wireless device and wants only the bank's applications to be able to access the library. The bank issues an access control ticket for the library (shared resource) on the bank's computer, access control to the bank's shared resource will be enforced in all runtime environments that have the shared resource deployed. If another bank creates a second application, an access control ticket for approval is created. When the access control ticket is approved by the resource owner, it is included with the second application.

Figure 10 shows a high level schematic of an access control ticket 1002. Cryptographically Verifiable Object Identifier (CVOID) is an identifier associated with an object such that given an object and the associated CVOID, a party would be able to verify authenticity of the association with a certain degree of reliability. The access control ticket 1002 generally comprises an application CVOID 1004, a shared resource CVOID 1006, and a set of privileges or permissions 1008.

A CVOID generally comprises an object identifier, for example but not limited to, an integer, an URI, or a hash, and a cryptographically verifiable object owner identifier, for example but not limited to an X509 Name or a public key.

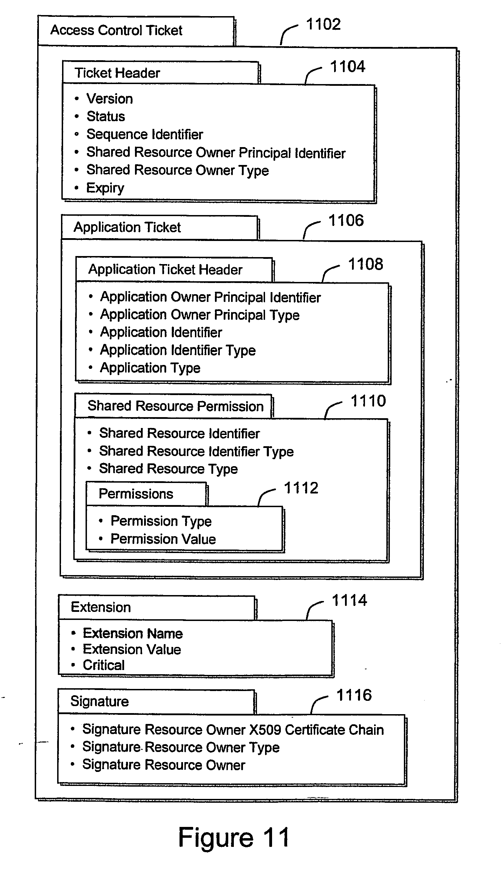

Figure 11 shows a non-limiting example of an access control ticket 1102.

The exemplary access control ticket 1102 comprises a Ticket Header 1104, and one or more Application Ticket 1106. The exemplary Access Control Ticket 1102 may further comprise an Extension 1114 and a Signature 1116.

The Ticket Header 1104 includes a Version field, a Status field, a Sequence Identifier field, a Shared Resource Owner Principal Identifier field, a Shared Resource Owner Type field, and an Expiry field.

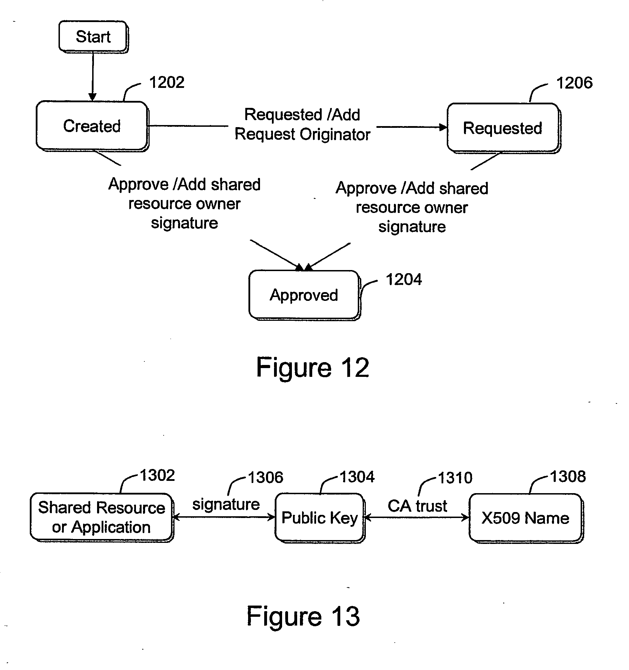

The Version field in the Ticket Header 1104 is used to support future versions. The Status of an Access Control Ticket 1102 may be "Created", "Requested" or "Approved". Figure 12 shows the life cycle of an access control ticket. The access control ticket can generally only be approved by the owner of shared resource.

When an access control ticket is created by an owner of a shared resource or an application, the status is "Created" 1202. The created access control ticket can be approved by the owner of the shared resource, in which case the status of the access control ticket becomes "Approved" 1204.

Alternatively, a created ticket can be sent to the shared resource owner by a requestor, for example, the owner of an application, for permission to access the shared resource, in which case ticket status becomes "Requested" 1206. A requested ticket can be approved by the owner of the shared resource in which case the status of the access control ticket becomes "Approved" 1204.

Sequence Identifier field identifies the sequence of the access control ticket. Null means the sequence is not specified. Sequence Identifier may be used for ticket revocation mechanism if implemented.

Owners for shared resources are identified by Shared Resource Owner Principal Identifiers. Shared Resource Owner Principal Identifiers can be of different types. For example, Shared Resource Owner Principal Identifiers can be X509 Name or public key. The public key is used here as a form of identification.

A digital signature generally provides authentication through two algorithms, one for signing a document which involves the signer's private key, and one for verifying signatures which involves the signer's public key, by accepting or rejecting the signed document. As shown in Figure 13, the association between a shared resource or application 1302 and a public key 1304 is verified by verifying the signature 1306. On the other hand, the public key's 1304 association to X509 Name 1308 is verified by a certification authority (CA) trust 1310.

In public key infrastructure (PKI), the association between the public key and the owner is attested by a digital certificate issued by the CA. The digital certificate is an electronic document which incorporates a digital signature produced by a certification authority to bind together a public key with an identity, such as the X509 name of the owner.

The certificate can be used to verify that a public key belongs to an individual. When shared resource owner principal is identified by X509 Name, the shared resource owner should have an X509 certificate signed by trusted certification authority and prove possession of the corresponding private key by producing signatures using the private key that corresponds to the public key specified in the X509 certificate, to prove its association with the X509 Name. When shared resource owner principal is identified by public key, the shared resource owner should prove possession of the corresponding private key by producing signatures using the private key that corresponds to the public key, to prove its association with the public key.

Certificates using PKI scheme may be advantageous for large-scale public-key cryptography. Securely exchanging secret keys amongst users of a large network, for example, a wireless network become increasingly impractical as the networks grow. However, using public key as an identifier provides a cost effective alternative to the certificate.

Shared Resource Owner Principal Identifiers field generally includes the value corresponding to the type as specified in the Shared Resource Owner Principal Identifiers Type field.

The Ticket Header 1104 may include an Expiry field to invalidate the access control ticket after the expiry.

The Application Ticket 1106 includes an Application Ticket Header 1108 and a Shared Resource 1110.

The Application Ticket Header 1108 includes an Application Owner Principal Identifier field, an Application Owner Principal Identifier Type field, an Application Identifier field, an Application Identifier Type field, and an Application Type field.

The Application Owner Principal Identifier Type in the Application Ticket Header 1108 may be, for example but not limited to, X509 Name or public key. Similar to the Shared Resource Owner Principal Identifier described above, when application owner principal is identified by X509 Name, the application owner should have an X509 certificate signed by trusted certification authority and prove possession of the corresponding private key by producing signatures using the private key that corresponds to the public key specified in the X509 certificate, to prove its association with the X509 Name. When application owner principal is identified by public key, the application owner should prove possession of the corresponding private key by producing signatures using the private key that corresponds to the public key, to prove its association with the public key.

An application, for which a permission is specified, is identified by the Application Identifiers. The type of an Application Identifier is specified in Application Identifier Type field. For example but not limited to, an application may be identified by using URI or the hash value of the application.

The Application Type field in the Application Ticket Header 1108 indicates the type of the application, for example, but not limited to, MDS application, Java application.

The Shared Resource Permissions 1110 includes a Shared Resource Identifier, a Shared Resource Identifier Type, a Shared Resource Type, and Permissions 1112.

The shared resource, for which a permission is specified, is identified by the Shared Resource Identifiers. Similar to the Application Identifier, the type of an Shared Resource Identifier is specified in Shared Resource Identifier Type field. For example but not limited to, shared resource may be identified by using URI or the hash value of the shared resource. Shared Resource Type indicates the type of the shared resource, for example but not limited to shared data, runtime environment plug-ins, or application entry points.

The Permissions 1112 specify a permission type, and a permission value. Permission Type can be Access_Type, then the value will be Read/Write/Read_Write in case of shared data. Permission Type can be Allow_Execution, the value will be Yes/No in case of a shared plugin. Permission Type can be Control_Type, the value will be Privileged/User in case of shared data. In privileged mode application can destroy shared data. In user mode, application cannot destroy shared data.

The Access Control Ticket 1102 may further comprise an Extension 1114 which includes an extension name, an extension value, and critical. The extensions may be used for future extensibility. Critical is a Boolean flag which tells whether the extension is critical or not.

The Access Control Ticket 1102 may further include a Signature 1116.

After an Access Control Ticket is approved by an owner of a shared resource, a shared resource owner signature is included. The signature includes a Shared Resource Owner X509 Certificate Chain, and a Shared Resource Owner Type in addition to the Shared Resource Owner Signature.

An X509 permits each certificate to be signed by CA. The CA's certificate may itself be signed by a different CA, all the way up to a root certificate which is available to those who use a lower - level CA certificate, forming a X509 certificate chain. In the X509 system, a CA generally issues a certificate binding a public key to a particular Distinguished Name in the X509 tradition, or to an alternative name.

If an Access Control Ticket is requested by an application owner, the requested Access Control Ticket may include an application owner signature for proving the authenticity, in this case the signature includes a Requestor X509 Certificate Chain, and a Requestor Type in addition to the Requestor Signature. A Requestor may generally be an application owner. However, it should be apparent to a person skilled in the art that a access control ticket may be requested by an unrelated party.

Therefore, the Shared Resource Principal Owner Identifier and the Application Principal Owner Identifier as described above create a cryptographically verifiable namespace, so non-verifiable object identifiers such as integers, URI, or hash for Shared Resource Identifier or Application Identifier can be part of this namespace. These non-verifiable object identifiers, on the other hand, differentiate the different objects for the same owner.

Access Control Tickets may be transported to runtime environment with shared resources, with applications, or separately.

It should be apparent to a person skilled in the art that an object can be cryptographically verified in many other ways. For example, but not limited to, as an alternative to the centralized trust model of PKI, a web of trust scheme, whereby the signature is of either the user by using a self-signed certificate or other users through endorsements can be used.

If a shared resource or an application does not have a cryptographically verifiable owner, the shared resource or the application is associated with an anonymous owner.

Permissions generally cannot be granted to applications associated with an anonymous owner. If it is desirable to grant permissions to applications without a cryptographically verifiable owner, i.e. applications associated with an anonymous owner, then permissions should be granted to all applications for that shared resource. Referring to Figure 11, the Application Owner Principal Identifier field in the Application Ticket Header 1108 has the value "All".

If an application does not have a cryptographically verifiable owner, the Application Owner Principal Type field in the Application Ticket Header 1108 in Figure 11 may have the value "Constant", and the Application Owner Principal Identifier will have the value "All". The application may only access shared resources with access control permissions issued to all owners as described above.

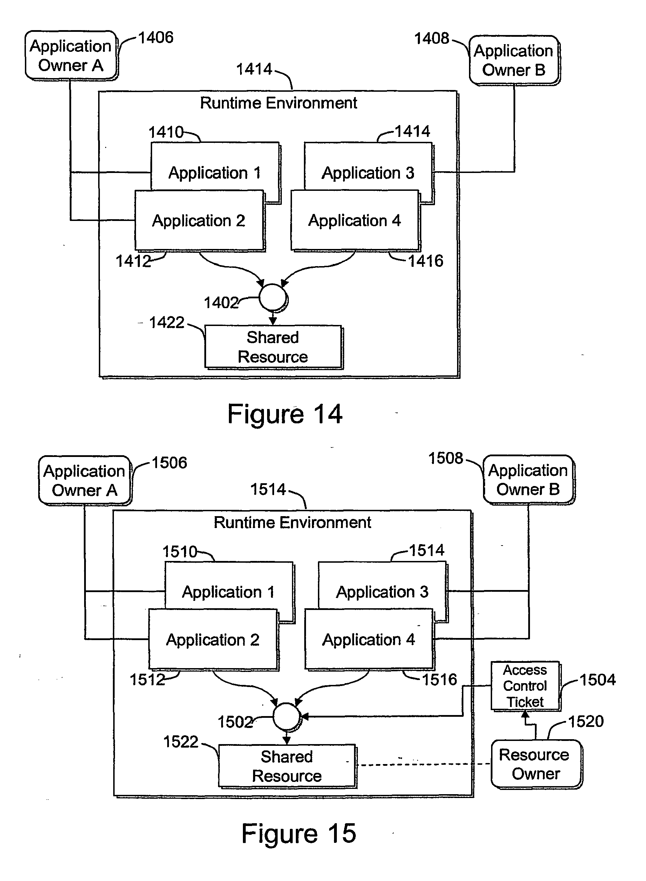

Figure 14 shows three applications 1410, 1412, 1414 with application owners 1406, 1408 and an application 1416 without application owner accessing 1402 a shared resource 1422 in a runtime environment 1414.

Figure 15 illustrates an example where permissions 1502, derived from the access control ticket 1504 are granted to all application owners 1506 and 1508 for all applications 1510, 1512, 1514 and 1516 in the runtime environment 1514. In this example, the application is protected since the identify of the shared resource is verified. Also referring to Figure 11, the Application Identifier field in Application Ticket 1106 is set to "All". The access control ticket 1504 is created by the resource owner 1520 of the shared resource 1522.

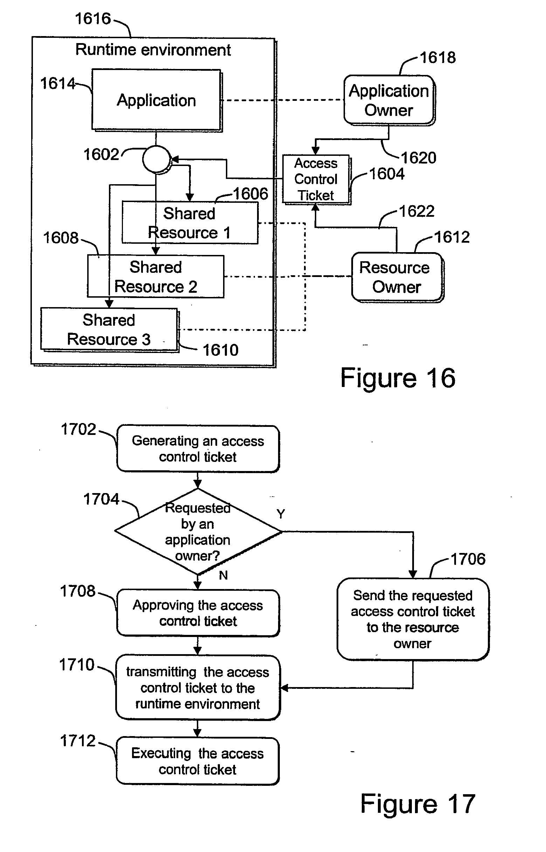

Figure 16 illustrates another example where permissions 1602, derived from the access control ticket 1604, are granted to all shared resources 1606, 1608 and 1610 owned by a single shared resource owner 1612 to the application 1614 in the runtime environment 1616. The application is owned by the application owner 1618, who may request 1620 to access the shared resource 1610. The access control ticket 1604 is created and approved 1622 by the resource owner 1612 of the shared resource 1610. Referring to Figure 11, the Shared Resource Identifier field in Shared Resource Permission field 1110 is set to "All".

Figure 17 shows steps of a method in accordance with one embodiment of the present patent disclosure. An access control ticket including a permission for the resource, an owner identifier identifying a remote resource owner and another owner identifier identifying the application owner is generated 1702, if the ticket is requested by an application owner 1704, the requested access control ticket is sent to the shared resource owner 1706 for approval. Otherwise the access control ticket is created and approved by the owner of the shared resource 1708 and transmitted to the runtime environment 1710 and executed 1712.

Embodiments within the scope of the present patent disclosure can be implemented in digital electronic circuitry, or in computer hardware, firmware, software, or in combinations thereof. Apparatus within the scope of the present patent disclosure can be implemented in a computer program product tangibly embodied in a machine-readable storage device for execution by a programmable processor; and method actions within the scope of the present patent disclosure can be performed by a programmable processor executing a program of instructions to perform functions of the patent disclosure by operating on input data and generating output. Embodiments within the scope of the present patent disclosure can be implemented advantageously in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object oriented programming language, or in assembly or machine language if desired; and in any case, the language can be a compiled or interpreted language. Suitable processors include, by way of example, both general and special purpose microprocessors. Generally, a processor will receive instructions and data from a read-only memory and/or a random access memory. Generally, a computer will include one or more mass storage devices for storing data files. Embodiments within the scope of the present patent disclosure include computer-readable media for carrying or having computer-executable instructions, computer-readable instructions, or data structures stored thereon. Such computer-readable media may be any available media, which is accessible by a general-purpose or special-purpose computer system. Examples of computer-readable media may include physical storage media such as RAM, ROM, EPROM, CD-ROM or other optical disk storage, magnetic disk storage or other magnetic storage devices, or any other media which can be used to carry or store desired program code means in the form of computer-executable instructions, computer-readable instructions, or data structures and which may be accessed by a general-purpose or special-purpose computer system. Any of the foregoing can be supplemented by, or incorporated in, ASICs (application-specific integrated circuits). While particular embodiments of the present patent disclosure have been shown and described, changes and modifications may be made to such embodiments without departing from the true scope of the patent disclosure.

## Claims

1. A method for controlling an access (904) to a resource, the method comprising the steps of:
providing a runtime environment (908) on a wireless device (102), the runtime environment having an application (906) and a resource (910), the resource owned by a resource owner (916), wherein the resource owner is remote from the runtime environment (908);
generating an access control ticket (902), the access control ticket being generated by an application owner (912) or the resource owner (916); the access control ticket including a permission (1008) for the resource (910), a first owner identifier (1006) identifying the resource owner and a second owner identifier (1004) identifying the application owner (912); the access control ticket further including a status selected from the group consisting of Created (1202), Requested (1206) and Approved (1204); wherein the status is Created (1202) when the access control ticket (902) is created; wherein the status is Requested (1206) when the access control ticket is sent to the resource owner (916) for permission to access the resource (910); and wherein the status is Approved when the access control ticket is approved by the resource owner (916);
approving the access control ticket (902) by the resource owner (916) resulting in the status becoming Approved (1204);
transmitting the access control ticket (902) to the runtime environment (908), and
executing the application (906) in the runtime environment resulting in a process (907), the process accessing the resource based on the permission.

2. The method of claim 1, wherein the first owner identifier or the second owner identifier is a cryptographically verifiable identifier (1004, 1006).

3. The method of claim 2, further comprising the step of signing the resource or the application (1302) with a private key, resulting in a signature (1306) verifiable with a public key (1304) corresponding to the private key.

4. The method of claim 3, wherein the cryptographically verifiable identifier is the public key or an X509 name (1308), particularly, wherein the public key and the X509 name are associated and attested by a certificate (1310).

5. The method of claim 1, wherein the access control ticket further includes a first identifier (1110) identifying the resource in the runtime environment, and a second identifier (1108) identifying the application in the runtime environment.

6. The method of claim 5, wherein the first identifier and/or the second identifier is a URI or a hash value of the resource.

7. The method of claim 1, wherein the resource is a shared resource (910).

8. The method of claim 1, further comprising the step of signing the access control ticket.

9. A wireless device comprising:
a runtime environment (908), the runtime environment having an application (906) and a resource (910), the resource owned by a resource owner (916), wherein the resource owner is remote from the runtime environment (908);
a module adapted to receive an access control ticket (902), the access control ticket including a permission for the resource (1008), a first owner identifier identifying the resource owner (1006) and a second owner identifier identifying the application owner (1004); the access control ticket (918) approved by the resource owner (916); the access control ticket further including a status; wherein the status is Created (1202) when the access control ticket (902) is created by an application owner (912) or the resource owner (916); wherein the status is Requested (1206) when the access control ticket is created by the application owner (912) and sent to the resource owner (916) for permission to access the resource (910); and wherein the status is Approved when the access control ticket is approved by the resource owner (916); and
a module adapted to execute the application in the runtime environment resulting in a process (907), the process accessing (904) the resource based on the permission.

10. The wireless device of claim 9, wherein the first owner identifier or the second owner identifier is a cryptographically verifiable identifier (1004, 1006).

11. The wireless device of claim 10, wherein the resource or the application (1302) is signed with a private key, resulting in a signature (1306) verifiable with a public key (1304) corresponding to the private key.

12. The wireless device of claim 11, wherein the cryptographically verifiable identifier is the public key or an X509 name (1308), particularly, wherein the public key and the X509 name are associated and attested by a certificate (1310).

13. The wireless device of claim 9, wherein the access control ticket further includes a first identifier (1110) identifying the resource in the runtime environment, and a second identifier (1108) identifying the application in the runtime environment.

14. The wireless device of claim 13, wherein the first identifier and/or the second identifier is a URI or a hash value of the resource.

## Patentansprüche

1. Verfahren zum Steuern eines Zugriffs (904) auf eine Ressource, wobei das Verfahren die Schritte aufweist:
Vorsehen einer Laufzeitumgebung (908) auf einer drahtlosen Vorrichtung (102), wobei die Laufzeitumgebung eine Anwendung (906) und eine Ressource (910) hat, wobei die Ressource einem Ressource-Besitzer (916) gehört, wobei der Ressource-Besitzer entfernt von der Laufzeitumgebung (908) ist;
Erzeugen eines Zugriffssteuerungstickets (902), wobei das Zugriffssteuerungsticket von einem Anwendungs-Besitzer (912) oder dem Ressource-Besitzer (916) erzeugt wird; wobei das Zugriffssteuerungsticket eine Erlaubnis (1008) für die Ressource (910), einen ersten Besitzer-Identifizierer (1006), der den Ressource-Besitzer identifiziert, und einen zweiten Besitzer-Identifizierer (1004) umfasst, der den Anwendungs-Besitzer (912) identifiziert; wobei das Zugriffssteuerungsticket weiter einen Status umfasst, der aus der Gruppe ausgewählt ist, die aus "Erzeugt" (1202), "Angefordert" (1206) und "Anerkannt" (1204) besteht; wobei der Status "Erzeugt" (1202) ist, wenn das Zugriffssteuerungsticket (902) erzeugt wird; wobei der Status "Angefordert" (1206) ist, wenn das Zugriffssteuerungsticket an den Ressource-Besitzer (916) gesendet wird zur Erlaubnis, auf die Ressource (910) zuzugreifen; und wobei der Status "Anerkannt" (1204) ist, wenn das Zugriffssteuerungsticket von dem Ressource-Besitzer (916) anerkannt wird;
Anerkennen des Zugriffssteuerungstickets (902) durch den Ressource-Besitzer (916), was dazu führt, dass der Status "Anerkannt" (1204) wird;
Senden des Zugriffssteuerungstickets (902) an die Laufzeitumgebung (908), und
Ausführen der Anwendung (906) in der Laufzeitumgebung, was zu einem Prozess (907) führt, wobei der Prozess auf die Ressource zugreift basierend auf der Erlaubnis.

2. Verfahren gemäß Anspruch 1, wobei der erste Besitzer-Identifizierer oder der zweite Besitzer-Identifizierer ein kryptographisch verifizierbarer Identifizierer (1004, 1006) ist.

3. Verfahren gemäß Anspruch 2, das weiter aufweist den Schritt eines Signierens der Ressource oder der Anwendung (1302) mit einem privaten Schlüssel, was zu einer Signatur (1306) führt, die mit einem öffentlichen Schlüssel (1304) verifizierbar ist, der dem privaten Schlüssel entspricht.

4. Verfahren gemäß Anspruch 3, wobei der kryptographisch verifizierbare Identifizierer der öffentliche Schlüssel oder ein X509-Name (1308) ist, insbesondere wobei der öffentliche Schlüssel und der X509-Name assoziiert sind und durch ein Zertifikat (1310) bestätigt sind.

5. Verfahren gemäß Anspruch 1, wobei das Zugriffssteuerungsticket weiter einen ersten Identifizierer (1110), der die Ressource in der Laufzeitumgebung identifiziert, und einen zweiten Identifizierer (1108) umfasst, der die Anwendung in der Laufzeitumgebung identifiziert.

6. Verfahren gemäß Anspruch 5, wobei der erste Identifizierer und/oder der zweite Identifizierer ein URI oder ein Hash-Wert der Ressource ist.

7. Verfahren gemäß Anspruch 1, wobei die Ressource eine gemeinsam genutzte Ressource (910) ist.

8. Verfahren gemäß Anspruch 1, das weiter den Schritt aufweist eines Signierens des Zugriffssteuerungstickets.

9. Drahtlose Vorrichtung, die aufweist:
eine Laufzeitumgebung (908), wobei die Laufzeitumgebung eine Anwendung (906) und eine Ressource (910) hat, wobei die Ressource einem Ressource-Besitzer (916) gehört, wobei der Ressource-Besitzer entfernt von der Laufzeitumgebung (908) ist;
ein Modul, das ausgebildet ist zum Empfangen eines Zugriffssteuerungstickets (902), wobei das Zugriffssteuerungsticket eine Erlaubnis für die Ressource (1008), einen ersten Besitzer-Identifizierer, der den Ressource-Besitzer (1006) identifiziert, und einen zweiten Besitzer-Identifizierer umfasst, der den Anwendungs-Besitzer (1004) identifiziert;
wobei das Zugriffssteuerungsticket (918) von dem Ressource-Besitzer (1006) anerkannt wird; wobei das Zugriffssteuerungsticket weiter einen Status umfasst; wobei der Status "Erzeugt" (1202) ist, wenn das Zugriffssteuerungsticket (902) erzeugt wird durch einen Anwendungs-Besitzer (912) oder den Ressource-Besitzer (916); wobei der Status "Angefordert" (1206) ist, wenn das Zugriffssteuerungsticket von dem Anwendungs-Besitzer (912) erzeugt wird und an den Ressource-Besitzer (916) gesendet wird zur Erlaubnis, auf die Ressource (910) zuzugreifen;
und wobei der Status "Anerkannt" (1204) ist, wenn das Zugriffssteuerungsticket von dem Ressource-Besitzer (916) anerkannt wird; und
ein Modul, das ausgebildet ist zum Ausführen der Anwendung in der Laufzeitumgebung, was zu einem Prozess (907) führt, wobei der Prozess auf die Ressource zugreift (904) basierend auf der Erlaubnis.

10. Drahtlose Vorrichtung gemäß Anspruch 9, wobei der erste Besitzer-Identifizierer oder der zweite Besitzer-Identifizierer ein kryptographisch verifizierbarer Identifizierer (1004, 1006) ist.

11. Drahtlose Vorrichtung gemäß Anspruch 10, wobei die Ressource oder die Anwendung (1302) mit einem privaten Schlüssel signiert wird, was zu einer Signatur (1306) führt, die mit einem öffentlichen Schlüssel (1304) verifizierbar ist, der dem privaten Schlüssel entspricht.

12. Drahtlose Vorrichtung gemäß Anspruch 11, wobei der kryptographisch verifizierbare Identifizierer der öffentliche Schlüssel oder ein X509-Name (1308) ist, insbesondere wobei der öffentliche Schlüssel und der X509-Name assoziiert sind und durch ein Zertifikat (1310) bestätigt sind.

13. Drahtlose Vorrichtung gemäß Anspruch 9, wobei das Zugriffssteuerungsticket weiter einen ersten Identifizierer (1110), der die Ressource in der Laufzeitumgebung identifiziert, und einen zweiten Identifizierer (1108) umfasst, der die Anwendung in der Laufzeitumgebung identifiziert.

14. Drahtlose Vorrichtung gemäß Anspruch 13, wobei der erste Identifizierer und/oder der zweite Identifizierer ein URI oder ein Hash-Wert der Ressource ist.

## Revendications

1. Procédé pour contrôler l'accès (904) à une ressource, le procédé comprenant les étapes qui consistent à :
fournir un environnement d'exécution (908) sur un dispositif sans fil (102), l'environnement d'exécution ayant une application (906) et une ressource (910), la ressource détenue par un propriétaire de ressource (916), où le propriétaire de ressource est distant de l'environnement d'exécution (908) ;
générer un billet de contrôle d'accès (902), le billet de contrôle d'accès étant généré par un propriétaire d'application (912) ou par le propriétaire de ressource (916) ; le billet de contrôle d'accès comportant une permission (1008) pour la ressource (910), un premier identifiant de propriétaire (1006) qui identifie le propriétaire de ressource et un deuxième identifiant de propriétaire (1004) qui identifie le propriétaire d'application (912) ; le billet de contrôle d'accès comportant en outre un état choisi dans le groupe d'états constitué de l'état Créé (1202), de l'état Demandé (1206) et de l'état Approuvé (1204) ; où l'état est l'état Créé (1202) lorsque le billet de contrôle d'accès (902) est créé ; où l'état est l'état Demandé (1206) lorsque le billet de contrôle d'accès est envoyé au propriétaire de ressource (916) pour une permission d'accès à la ressource (910) ; et l'état est l'état Approuvé lorsque le billet de contrôle d'accès est approuvé par le propriétaire de ressource (916) ;
approuver le billet de contrôle d'accès (902) par le propriétaire de ressource (916) ce qui donne l'état Approuvé (1204) ;
transmettre le billet de contrôle d'accès (902) à l'environnement d'exécution (908), et
exécuter l'application (906) dans l'environnement d'exécution ce qui résulte en un processus (907), le processus accédant à la ressource sur la base de la permission.

2. Procédé de la revendication 1, où le premier ou le deuxième identifiant de propriétaire est un identifiant (1004, 1006) qui peut être vérifié de manière cryptographique.

3. Procédé de la revendication 2, comprenant en outre l'étape qui consiste à signer la ressource ou l'application (1302) par une clé privée, ce qui résulte en une signature (1306) pouvant être vérifiée par une clé publique (1304) correspondant à la clé privée.

4. Procédé de la revendication 3, où l'identifiant pouvant être vérifié de manière cryptographique est la clé publique ou un nom X509 (1308), en particulier, où la clé publique et le nom X509 sont associés et attestés par un certificat (1310).

5. Procédé de la revendication 1, où le billet de contrôle d'accès comprend en outre un premier identifiant (1110) qui identifie la ressource dans l'environnement d'exécution, et un deuxième identifiant (1108) qui identifie l'application dans l'environnement d'exécution.

6. Procédé de la revendication 5, où le premier identifiant et/ou le deuxième identifiant est un URI ou une valeur de hachage de la ressource.

7. Procédé de la revendication 1, où la ressource est une ressource partagée (910).

8. Procédé de la revendication 1, comprenant en outre l'étape qui consiste à signer le billet de contrôle d'accès.

9. Dispositif sans fil comprenant :
un environnement d'exécution (908), l'environnement d'exécution ayant une application (906) et une ressource (910), la ressource détenue par un propriétaire de ressource (916), où le propriétaire de ressource est distant de l'environnement d'exécution (908) ;
un module adapté pour recevoir un billet de contrôle d'accès (902), le billet de contrôle d'accès comprenant une permission pour la ressource (1008), un premier identifiant de propriétaire qui identifie le propriétaire de ressource (1006) et un deuxième identifiant de propriétaire qui identifie le propriétaire (1004) de l'application ; le billet de contrôle d'accès (918) est approuvé par le propriétaire de ressource (916) ; le billet de contrôle d'accès comprenant en outre un état ; où l'état est l'état Créé (1202) lorsque le billet de commande d'accès (902) est créé par un propriétaire d'application (912) ou le propriétaire de ressource (916) ; où l'état est l'état Demandé (1206) lorsque le billet de contrôle d'accès est créé par le propriétaire d'application (912) et envoyé au propriétaire de ressource (916) pour une permission d'accès à la ressource (910) ; et où l'état est l'état Approuvé lorsque le billet de contrôle d'accès est approuvé par le propriétaire de ressource (916) ; et
un module adapté pour exécuter l'application dans l'environnement d'exécution, ce qui résulte en un processus (907), le processus accédant (904) à la ressource sur la base de la permission.

10. Dispositif sans fil de la revendication 9, où le premier ou le deuxième identifiant de propriétaire est un identifiant pouvant être vérifié de manière cryptographique (1004, 1006).

11. Dispositif sans fil de la revendication 10, où la ressource ou l'application (1302) est signée avec une clé privée, ce qui résulte en une signature (1306) pouvant être vérifiée par une clé publique (1304) correspondant à la clé privée.

12. Dispositif sans fil de la revendication 11, où l'identifiant pouvant être vérifié de manière cryptographique est la clé publique ou un nom X509 (1308), en particulier, où la clé publique et le nom X509 sont associés et attestés par un certificat (1310).

13. Dispositif sans fil de la revendication 9, où le billet de contrôle d'accès comprend en outre un premier identifiant (1110) qui identifie la ressource dans l'environnement d'exécution, et un deuxième identifiant (1108) qui identifie l'application dans l'environnement d'exécution.

14. Dispositif sans fil de la revendication 13, où le premier identifiant et/ou le deuxième identifiant est un URI ou une valeur de hachage de la ressource.
